# EUROPEAN PATENT SPECIFICATION

(11) **EP 1 886 866 B1**
(45) Date of publication and mention of the grant of the patent: **09.06.2010**
(21) Application number: 07013877.1
(22) Date of filing: 16.07.2007
(51) Int. Cl.: B60N 2/14, B62D 33/06, B62D 49/06

(54) **Reversible driving arrangements**
Umschaltbare Antriebsanordnung
Agencements de conduite réversibles

(30) Priority: 09.08.2006 GB 0615771
(43) Date of publication of application: 13.02.2008
(73) Proprietor: AGCO GmbH, 87616 Marktoberdorf (DE)
(72) Inventor: Gristenbrei, Erich, 87640 Biessenhofen (DE); Knobloch, Jurgen, 87674 Ruderatshofen (DE); Mannsbart, Helmut, 86807 Buchloe (DE)
(74) Representative: Morrall, Roger

(56) References cited:
- EP-A- 1 138 835
- DE-A1- 1 505 281
- FR-A- 2 531 116
- FR-A- 2 664 556
- JP-A- 59 192 674
- US-A- 5 052 512

## Description

This invention relates to reversible driving arrangements for tractors or any other vehicles in which a driver's operating station including a seat, a control panel and a steering wheel can be rotated between a forward driving position for driving the vehicle in a forward driving direction and a reverse driving position for driving the vehicle in a reverse driving direction.

Examples of such reversible driving arrangements are well known and are shown, for example, in the Applicant's own prior art arrangement of DE 3807848.

As the complexity and weight of driver's operating stations increases, due to the inclusion of complex control devices mounted on for example, the arms of the driver's seat, the inclusion of ever increasingly large display screens, the use of active seat suspension and ventilation, and the mounting of control pedals and parts of the braking system on the steering column etc, the force required to rotate the driver's operating station between the forward and reverse driving positions has also increased due to weight of the extra components and to the number of hoses, wires and other connections which are needed to connect the reversible station with the chassis of the vehicle and which must be twisted when the reversible station is rotated between its two positions.

FR-2,664,556 discloses an arrangement according to the preamble of claim 1.

US30344670 discloses a rotary vane type actuator arrangement for rotation an entire operator's cab mounted on a turn table through 360 degrees.

US4278144 discloses a tractor vehicle with a seat and steering console which can be manually rotated between a forward facing position and a rearward facing position. The steering console can be pivoted upwardly relative to the seat to reduce its width as the seat and console are rotated within a narrow width of the cab.

It is an object of the present invention to provide a reversible driving arrangement which overcomes the above increasing problem.

Thus according to the present invention there is provided a reversible driving arrangement for a tractor or any other vehicle in which a driver's operating station including a seat, control panel and steering wheel can be rotated between a forward driving position and a reverse driving position, the operating station being rotatable mounted on a floor of the vehicle via a fluid pressure operated rotary actuator which includes a radially extending vane which can be pressurised on one side or the other to assist in rotating the operating station between the forward and reverse driving positions, the arrangement being **characterised in that** parts of the operating station pivot upwardly to a retracted position prior to rotation within a cab of the vehicle between the forward and reverse driving positions to reduce the overhang of they station, an electronic control unit controls application of a pressurized fluid upon the vane in response to signals received from first sensing means which detect whether the station is currently in the forward or reverse driving position, and a second sensing means which detects when the operating station has been pivoted upwardly to the retracted position.

A fluid flow control valve may be provided which controls the pressurisation of the vane on one side or the other, the electronic control unit issuing a signal to the fluid flow control valve to pressurise the appropriate side of the vane to assist in rotating the station to the other driving position on receipt of signals from the first and second sensing means indicating that the operating station is in its retracted position.

In a preferred construction the rotary actuator includes an annular actuating chamber formed between a first component non rotatable fixed to the floor of the vehicle and a second component on which the operating station is mounted and which is rotatable relative to the first component, the vane rotating with the second component and a second radially extending vane being attached to the first component, so that, by pressurising the portion of the annular chamber between one side of the vane and the second vane, the second component and thus the operating station can be rotated in one direction, and, by pressurising the portion of the annular chamber between the other side of the vane and the second vane, the second component and thus the operating station can be rotated in the other direction.

To facilitate rotation an annular bearing, which may be of any suitable type, is provided between the first and second components to support the rotation of the operator's station.

In a preferred construction the first component is of generally annular form and defines a U-shaped cross-section chamber with the ends of the limbs of the U-shaped cross-section extending towards the axis of rotation of the second component, the annular chamber being sealed by a portion of the second component which extends within the centre of the first component and surrounds the axis of rotation of the second component.

Conveniently a lower side of the U-shaped cross-section chamber is provided with two ports for the alternative admission of pressurised fluid to rotate the second component relative to the first component in opposite directions. These ports are located on opposite sides of the vane in zones of the U-shaped cross-section chamber which are not swept by the vane.

In a preferred arrangement each vane comprises a support member secured to the respective first or second component, the support member having a projecting seal support portion, a generally ring-like seal surrounding the projecting seal support portion on a seal supporting shoulder, a mounting plate bolted or otherwise secured to the seal support portion to hold the seal between the plate and the seal supporting shoulder to hold the seal into sealing contact with the surrounding walls of the associated actuator chamber.

A latch is preferably provided to lock the station in the forward or reverse driving position, the latch being releasable by the driver.

As will be appreciated connections for the steering wheel, the control panel and other functions and communications systems extend through the centre of the first and second components in a direction generally parallel to the axis of rotation of the work station.

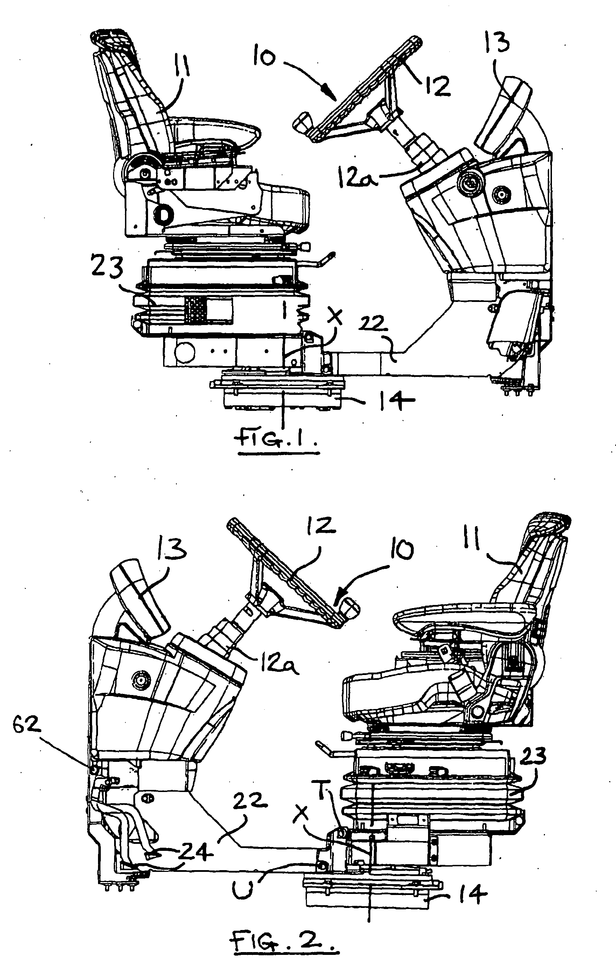

One embodiment of the present invention will now be described , by way of example only, with reference to the accompanying drawings in which :-
Figure 1 shows a side view of a driver's operating station in accordance with the present invention in the forward driving position;
Figure 2 shows a side view of a driver's operating station in accordance with the present invention in the reverse driving position;
Figure 3 is a view from beneath of a rotary actuator used in the operating station of Figures 1 and 2;
Figure 4 is as side view in the direction of the arrow Y of Figure 3;
Figure 5 is a section on the line A-A of Figure 3;
Figures 6 and 7 are perspective views from above and below respectively of the actuator of Figure 3;
Figure 8 is a section on the line C-C of Figure 4;
Figure 9 is an exploded view of the actuator of Figures 6 and 7;
Figure 10 shows a horizontal section through the actuator with the pneumatic supply system indicated diagrammatically;
Figure 11 shows on a large scale the detail circled at G on Figure 8;
Figure 12 shows on a larger scale the detail circled at H in Figure 5
Figure 13 shows in plan details of the hydraulic hose arrangement used to supply the steering unit mounted on the operating station;
Figure 14 shows a vertical section through the hose arrangement of Figure 13;
Figure 15 shows a side view of the driver's operating station with the sub-frame which supports the steering wheel and pedals etc pivoted upwardly prior to rotation to the reverse driving position;
Figure 16 shows a perspective view of the part of the driver's operating station showing the latching pin which locks the station in the forward and reverse driving positions, and
Figure 17 shows on a larger scale the details of the latching pin of Figure 16

Referring to the drawings, a reversible driving arrangement for a driver's operating station of a tractor is shown at 10 which includes an operator's seat 11, a steering wheel 12 and associated steering column 12a, and a display/control panel 13.

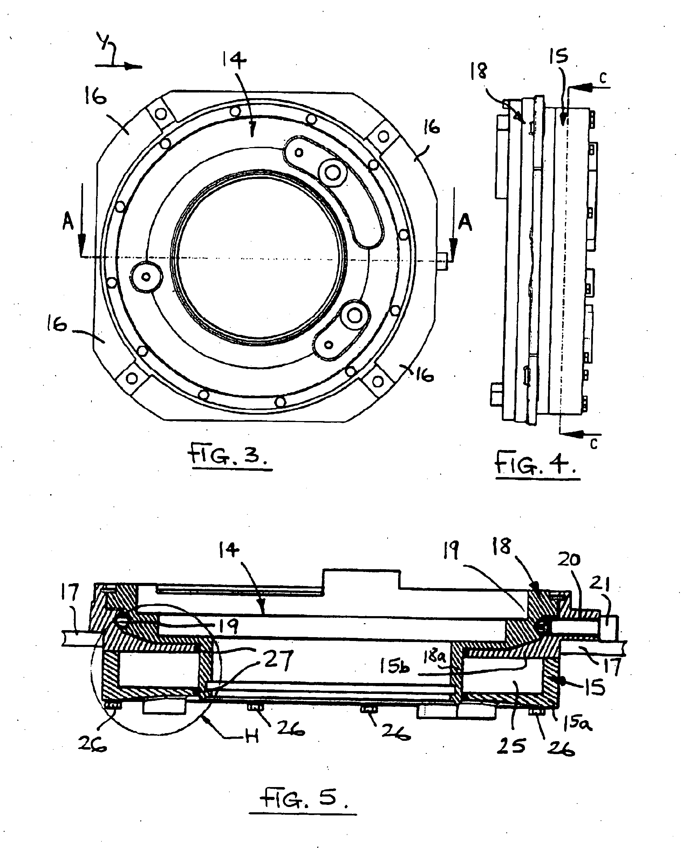

In accordance with the present invention, in order to provide for the rotation of the operating station between the forward and reverse driving positions about an axis X, the operating station is mounted on a rotary actuator 14 which is pneumatically operated. The basic constructional details of the actuator 14 are best seen in Figures 5. The actuator comprises a lower fixed component 15 which is bolted via flanges 16 to the floor 17 of the tractor cab and an upper component 18 which is rotatable relative to the lower fixed component 15 via bearings 19 which support the two components 15 and 18 for relative rotation through 180°. In the example described, the bearings are of the ball bearing type and are introduced between the components 15 and 16 via an inlet passage 20 which is closed by a bolt 21. Any other suitable form of bearing could be used to support the upper component 18 relative to the lower component 15.

The operating station is supported from the upper rotatable component 18 on a sub-frame 22 which supports the seat suspension 23 and the steering column 12a with associated brake, clutch and accelerator pedals 24 and all the ancillary components such as the hydraulic steering unit and possibly also the brake controls valves etc.

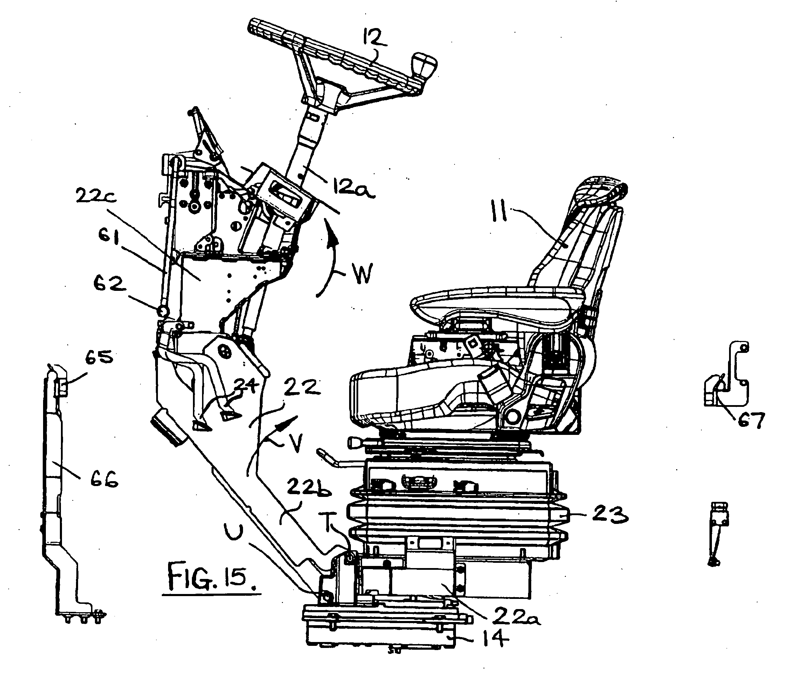

The sub-frame 22 is in three parts 22a, 22b and 22c which can pivot relative to each other as is shown in Figure 15. Parts 22a and 22b pivot about axes T and U thus allowing part 22b to rotate upwardly as indicated by arrow V and part 22c also rotates relative to part 22b as indicated by arrow W so that the operating station assumes the position show in Figure 15 thus reducing the overhang of steering wheel 12, steering column 12a and pedals 24 etc in order to facilitate the rotation of the operating station between its forward and reverse driving positions.

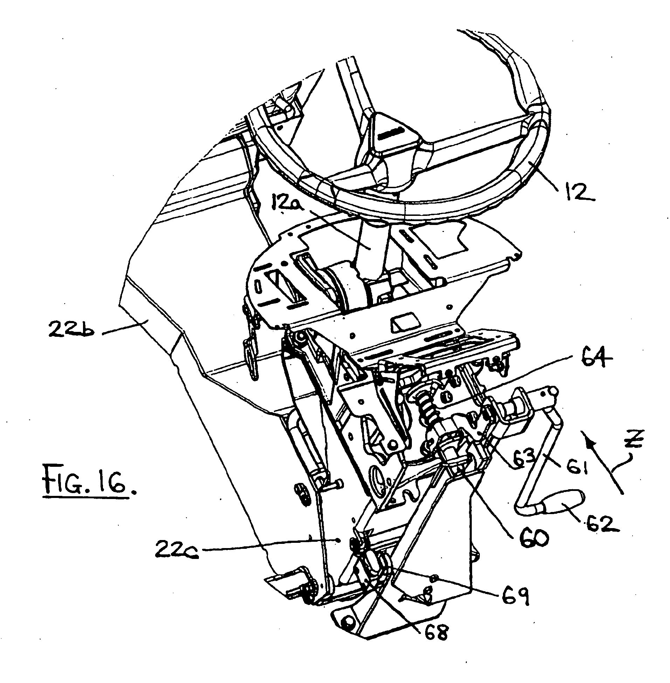

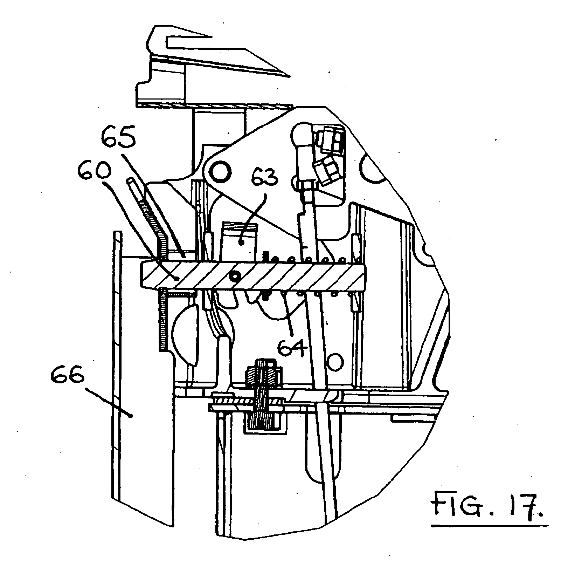

A latch pin 60 (see Figures 16 and 17) carried on sub frame part 22c locks the operators station in the forward and reverse driving positions. This latch pin is operated by a lever 61 provided with a handle 62. Lever 61 is connected via an arm 63 with latch pin 60 which is spring loaded at 64 to its extended position. Latch pin 60 engages a socket 65 carried on a column 66 secured to the floor at the front of the cab to lock the operating station in the forward driving position. A socket 67 is secured to the rear of the cab and receives the latching pin 60 when the operating station is in the reverse driving position.

A sensor 68 detects if the operators station is in the forward or reverse driving position and a second sensor 69 detects when the sub-frame parts 22b and 22c have been pivoted to the raised position shown in Figure 15. These sensors are connected with electronic control unit 47 as described below.

The lower component 15 of actuator 14 includes a working chamber 25 generally U-shaped cross-section. This component 15 is itself formed from a lower part 15a and an upper part 15b which are held together by bolts 26. The working chamber 25 is sealed to a central cylindrical boss 18a provided on the upper component 18 by seals 27. The bearing 19 supports the upper component 18 from the outside of upper part 15b.

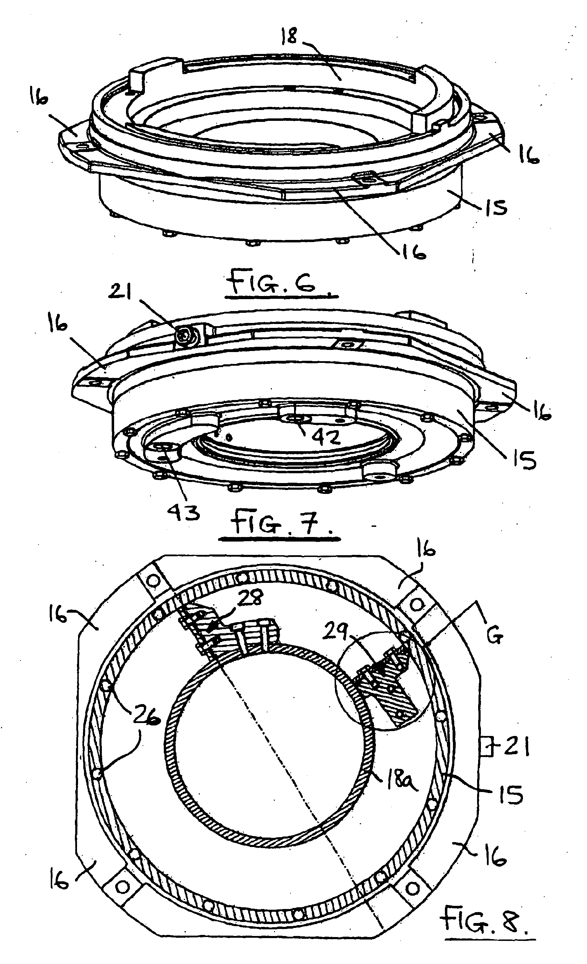

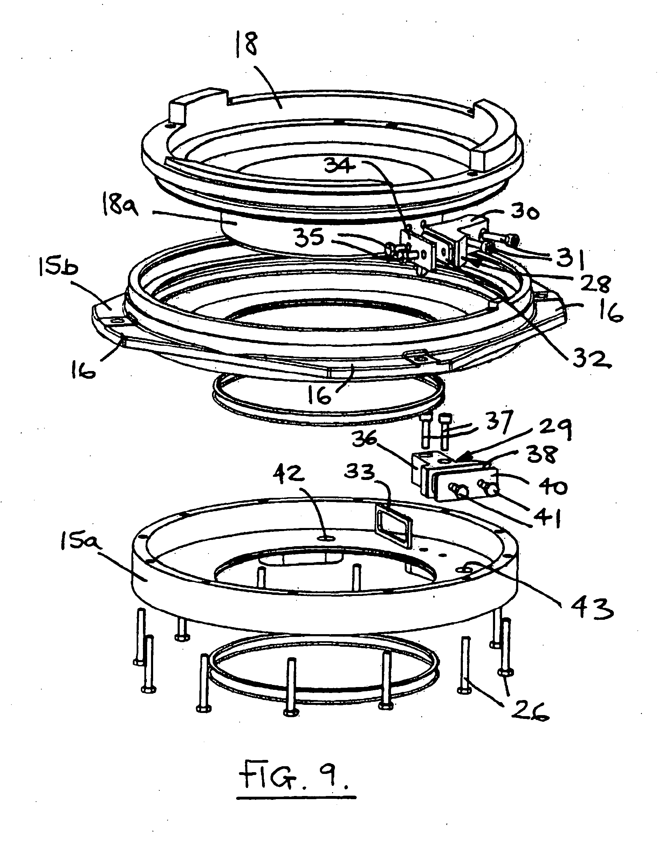

To assist in the rotation of the upper component 18 relative to the lower component 15 a radially extending vane 28 is fixed to the component 18. A similar vane 29 is fixed to the stationery component 18. Details of the vane 28 and 29 are best seen in Figures 8, 9 and 10 from which it can be seen that the vane 28 has a support member 30 which is bolted to the upper component 18 by bolts 31. As best seen in Figure 9 the support member 30 has a projecting seal support portion 32 on which is generally rectangular seal 33 is mounted. The seal is held on projection 32 by a plate 34 which is in turn held in place by bolts 35.

Similarly vane 29 has a support member 36 which is bolted to the lower wall of component 15 by bolts 37 and supports a rectangular seal 38 on a projecting seal support portion 39 via a plate 40 held in position by bolts 41.

Although in the arrangement described the vanes 28 and 29 are rigidly secured to the corresponding components 18 and 15 it is envisaged that some flexibility in the mounting of these vanes relative to the components on which they are mounted may be provided to take care of shock loads etc.

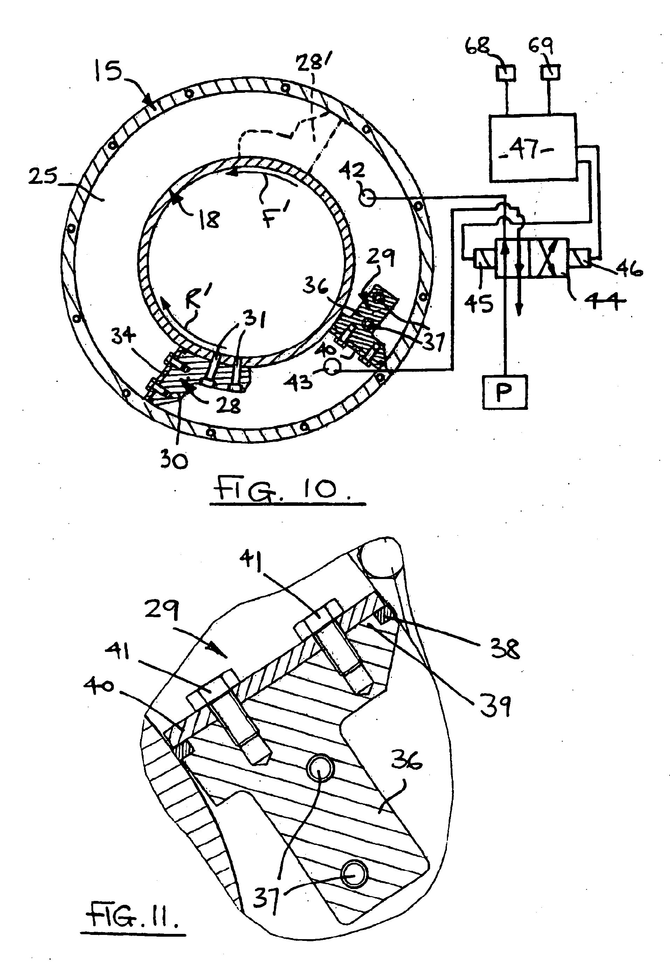

Referring to Figure 10 this shows diagrammatically the connection of a pneumatic supply P to the working chamber at 25 of the rotary actuator 14. The working chamber is provided with two ports 42 and 43 which emerge into the working chamber through the lower wall of the chamber. These ports are connected with a control valve 44 which may be either manually directly operated or, as shown in Figure 10, operated by solenoids 45 and 46 which are connected with an electronic control unit 47 of the tractor which controls not only the movement of the operator's work station but also many of the other functions on the tractor.

Assuming that the driver wishes to rotate the operating station from the forward driving position to the reverse position he pulls on handle 62 which rotates lever 61 in direction Z of figure 16 thus disengaging pin 60 from socket 65 on column 66 and allowing the driver to pivot the sub-frame parts 22b and 22c to the position shown in Figure 15. Sensor 69 detects when the Figure 15 position has been obtained and sensor 68 indicates that the operating station is in the forward driving position. These sensor signals are received by control unit 47 and solenoid 45 is actuated to move valve 44 to connect port 43 with the source of pneumatic pressure P thus moving vane 28 clockwise as indicated by arrow 'R' in Figure 10 thus positioning the operating station in the reverse driving position indicated by the dotted detail 28' in Figure 10. During this mode of operation the port 42 is connected to the atmosphere. When the operating station reaches the reverse driving position the sub-frame parts 22b and 22c are lowered and the pin 60 snaps into the socket 67 to lock the operating station in this required position .

During the rotation of the operating station between the forward and reverse driving positions the connections between the turning of the steering wheel and the turning effect provided by the associated power assisting steering unit is reverse to that, for example, turning the steering wheel anti-clockwise will turn the vehicle to the left whether the vehicle is being driven from the forward or reverse driving positions. Other control functions such as the turn indicators are also switched over during the rotation between the forward and reverse driving positions.

Should the driver wish to change from the reverse driving position to the forward driving position a similar process is required. The driver pulls on handle 62 to disengage pin 60 from socket 67 and pivots the sub-frame parts 22b and 22c to the raised Figure 15 position. The sensors 68 and 69 then initiate the actuation of solenoid 46 which moves valve 44 to connect port 42 to the source P of pneumatic pressure thus driving vane 28 in an anti-clockwise sense relative to fixed vane 29 as indicated by the arrow 'F'. During this mode of operation the port 43 is connected to the atmosphere.

When the operating station arrives in the forward driving position the sub-frame parts 22b and 22c are lowered so that pin 60 engages socket 65. Again during the rotation between the forward and reverse driving position the steering connections and turn indicator connections are reversed.

By pressurising the moveable vane 28 on one side of the other it will be appreciated that considerable force can be generated which greatly assists the operator in moving the work station to either the forward or reverse driving positions.

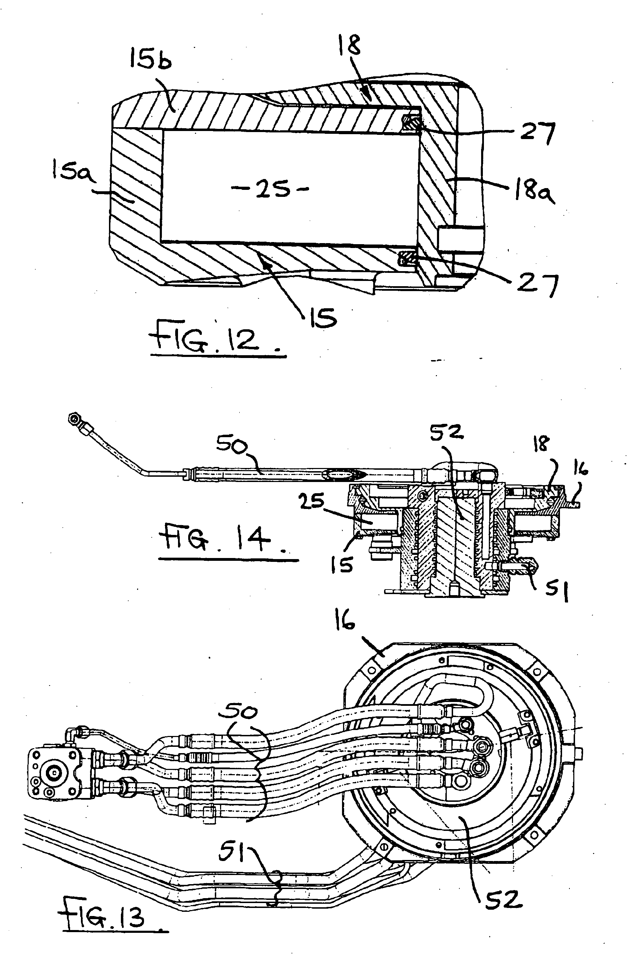

As indicated previously, the moveable driver's operating station includes complex components such as the hydraulic steering unit connected to steering wheel 12. The hose arrangement for this steering unit is shown partly in plan view and also in section in Figures 12 and 13. As will be appreciated, the hydraulic connections necessary to allow for the rotation of the hydraulic hoses 50 mounted on the rotatable component 18 relative to the fixed hoses 51 mounted on the stationery component 18 is complex and, since it does not form part of the present invention, will not be described in detail. It is sufficient to say that these connections are made via a unit 52 which extends down the centre of the two relative rotatable components 15 and 18 substantially in alignment with the rotation axis X of the operating station.

As will be appreciated all the other connections between the rotatable operating station and the non-rotating vehicle chassis must also pass down the centre of the relatively rotatable components 15 and 18. Again, since these connections do not form part of the present invention and will be well known to a man skilled in the art, they are not described in detail in this patent application.

## Claims

1. A reversible driving arrangement for a tractor or any other vehicle in which a driver's operating station (10) including a seat (11), control panel (13) and steering wheel can be rotated between a forward driving position and a reverse driving position, the operating station being rotatable mounted on a floor of the vehicle via a fluid pressure operated rotary actuator (14) which includes a radially extending vane (28) which can be pressurised on one side or the other to assist in rotating the operating station between the forward and reverse driving positions, the arrangement being **characterised in that** parts of the operating station pivot upwardly to a retracted position prior to rotation within a cab of the vehicle between the forward and reverse driving position to reduce the overhand of the station, an electronic control unit (47) controls application of a pressurized fluid upon the vane (28) in response to signals received from a first sensing means (68) which detect whether the station is currently in the forward or reverse driving position and a second sensing means (69) which detects when the operating station has been pivoted upwardly to the retracted position.

2. An arrangement according to claim 1 in which a fluid flow control valve (44) is provided which controls the pressurisation of the vane (28) on one side or the other, the electronic control unit (47) issuing a signal to the fluid flow control valve (44) to pressurising the appropriate side of the vane (28) to assist in rotation the station (10) to the other driving position on receipt of signals from the first and second sensing means (68,69) indicating that the operating station is in its retracted position.

3. An arrangement according to claim 1 or 2 **characterised in that** the rotary actuator (14) includes an annular actuating chamber (25) formed between a first component (15) non rotatable fixed to the floor of the vehicle and a second component (18) on which the operating station (10) is mounted and which is rotatable relative to the first component, the vane (28) rotating with the second component (18) and a second radially extending vane (29) being attached to the first component (15), so that, by pressurising the portion of the annular chamber (25) between one side of the vane (28) and the second vane (29), the second component (18) and thus the operating station (10) can be rotated in one direction, and, by pressurising the portion of the annular chamber between the other side of the vane (28) and the second vane (29), the second component (18) and thus the operating station (10) can be rotated in the other direction.

4. An arrangement according to claim 3 **characterised in that** the second component (18) is supported for rotation relative to the first component (15) on an annular bearing (19) between the components.

5. An arrangement according to claim 3 or 4 **characterised in that** the first component (15) is of generally annular form and defines a U-shaped cross-section chamber (25) with the ends of the limbs of the U-shaped cross-section extending towards the axis of rotation of the second component (18), the annular chamber being sealed (27) by a portion of the second component (18) which extends within the centre of the first component and surrounds the axis of rotation (X) of the second component.

6. An arrangement according to claims 4 or 5 **characterised in that** the second component (18) is supported for the rotation on the outside of one side (15b) of the U-shaped cross-section chamber of the first component via the annular bearing.

7. An arrangement according to claim 5 or 6 **characterised in that** a lower side (15a) of the U-shaped cross-section chamber is provided with two ports (42,43) for the alternative admission of pressurised fluid to rotate the second component (18) relative to the first component (15) in opposite directions.

8. An arrangement according to claim 7 **characterised in that** the pressurised fluid is air.

9. An arrangement according to any one of claims 2 to 7 **characterised in that** the or each vane (28:29) comprises a support member (30:36) secured to the respective first or second component (15:18), the support member having a projecting seal support portion (32:39), a generally ring-like seal (33:38) surrounding the projecting seal support portion on a seal supporting shoulder, a mounting plate (34:40) bolted or otherwise secured to the seal support portion to hold the seal between the plate and the seal supporting shoulder to hold the seal (22:38) into sealing contact with the surrounding walls of the associated actuator chamber (25).

10. An arrangement according to any one of claims 1 to 9 provided with a latch (60) to lock the station (10) in the forward or reverse driving position, the latch being releasable (62) by the driver.

11. An arrangement according to any one of claims 3 to 10 **characterised in that** the connections (50) for the steering wheel, the control panel and other functions and communications systems extend through the centre of the first and second components (15,18) in a direction generally parallel to the axis of rotation (X) of the work station (10).

## Patentansprüche

1. Reversierbare Fahr- oder Antriebsanordnung eines Zugfahrzeugs, insbesondere einen Traktor oder ein beliebiges anderes Fahrzeug, in der eine Betriebsstation (10) für den Fahrer, die einen Sitz (11), ein Steuer- oder Regelpaneel (13) und ein Lenkrad besitzt, zwischen einer Vorwärtsfahrt-Position und einer Rückwärtsfahrt-Position verdreht werden kann, wobei die Betriebsstation über einen durch einen fluidischen Druck betriebenen Rotations-Aktuator (14) verdrehbar und auf einem Boden des Fahrzeugs montiert ist, wobei der Rotations-Aktuator (14) einen sich radial erstreckenden Flügel, eine Schaufel oder einen Schieber (engl. "vane"; im Folgenden "Flügel") (28) besitzt, der auf einer Seite oder der anderen Seite druckbeaufschlagt werden kann zur Unterstützung einer Verdrehung der Betriebsstation zwischen der Vorwärtsfahrt-Position und der Rückwärtsfahrt-Position, **dadurch gekennzeichnet, dass** Teile der Betriebsstation vor der Rotation zwischen der Vorwärtsfahrt-Position und der Rückwärtsfahrt-Position in einer Kabine des Fahrzeugs aufwärts verschwenken zu einer eingefahrenen oder zurückgezogenen (im Folgenden "eingefahrenen") Position zur Verringerung eines Überhangs oder einer Auskragung der Betriebsstation, wobei eine elektronische Steuer- oder Regeleinheit (47) die Applikation eines druckbeaufschlagten Fluid auf den Flügel (28) steuert oder regelt in Abhängigkeit von Signalen, die von einem ersten sensierenden Mittel (68), welches ertasst, ob sich die Betriebsstation gerade in der Vorwärtsfahrt-Position oder der Rückwärtsfahrt-Position befindet, und von einem zweiten sensierenden Mittel (69), welches erfasst, wenn die Betriebsstation aufwärts verschwenkt worden ist in die eingefahrene Position, empfangen werden.

2. Fahranordnung nach Anspruch 1, **dadurch gekennzeichnet, dass** ein Steuer- oder Regelventil (44) für einen fluidischen Fluss vorgesehen ist, welches die Druckbeaufschlagung des Flügels (28) auf einer Seite oder der anderen Seite steuert oder regelt, wobei die elektronische Steuer- oder Regeleinheit (47) ein Signal für das Steuer- oder Regelventil (44) für den fluidischen Fluss erzeugt oder sendet zur Druckbeaufschlagung der geeigneten Seite des Flügels (28) zur Unterstützung einer Verdrehung der Betriebsstation (10) zu der anderen Fahrt-Position mit dem Empfang von Signalen von dem ersten und zweiten sensierenden Mittel (68, 69), die indizieren, dass sich die Betriebsstation in der eingefahrenen Position befindet.

3. Fahranordnung nach Anspruch 1 oder 2, **dadurch gekennzeichnet, dass** der Rotations-Aktuator (14) eine ringförmige, der Betätigung dienende Kammer (25) besitzt, die zwischen einer ersten Komponente (15), die nicht verdrehbar an dem Boden des Fahrzeugs fixiert ist, und einer zweiten Komponente (18), auf der die Betriebsstation (10) montiert ist und die gegenüber der ersten Komponente relativ verdrehbar ist, gebildet ist, wobei der Flügel (28) mit der zweiten Komponente (18) verdreht wird und ein zweiter, sich radial erstreckender Flügel (29) an der ersten Komponente (15) befestigt ist, so dass mit Druckbeaufschlagung des Bereich der ringförmigen Kammer (25) zwischen einer Seite des Flügels (28) und des zweiten Flügels (29) die zweite Komponente (18) und damit die Betriebsstation (10) in eine Richtung verdreht werden kann und durch Druckbeaufschlagung des Bereich der ringförmigen Kammer zwischen der anderen Seite des Flügels (28) und des zweiten Flügels (29) die zweite Komponente (18) und damit die Betriebsstation (10) in die andere Richtung verdreht werden kann.

4. Fahranordnung nach Anspruch 3, **dadurch gekennzeichnet, dass** die zweite Komponente (18) zur Verdrehung relativ zu der ersten Komponente (15) auf einem ringförmigen Lager (19) zwischen den Komponenten abgestützt ist.

5. Fahranordnung nach Anspruch 3 oder 4, **dadurch gekennzeichnet, dass** die erste Komponente (15) eine grundsätzlich ringförmige Gestalt besitzt und eine Kammer (25) mit U-förmigem Querschnitt definiert oder begrenzt, wobei sich die Enden der Schenkel des U-förmigen Querschnitts in Richtung der Rotationsachse der zweiten Komponente (18) erstrecken, die ringförmige Kammer abgedichtet (27) ist durch einen Bereich der zweiten Komponente (18), der sich im Inneren oder Zentrum der ersten Komponente erstreckt und die Rotationsachse (X) der zweiten Komponente umgibt.

6. Fahranordnung nach Anspruch 4 oder 5, **dadurch gekennzeichnet, dass** die zweite Komponente (18) für die Rotation auf der Außenseite auf einer Seite (15b) der Kammer mit U-förmigem Querschnitt der ersten Komponente über ein ringförmiges Lager abgestützt ist.

7. Fahranordnung nach Anspruch 5 oder 6, **dadurch gekennzeichnet, dass** eine untere Seite (15a) der Kammer mit U-förmigem Querschnitt mit zwei Anschlüssen (42, 43) ausgestattet ist für das alternative Zulassen oder Zuführen druckbeaufschlagten Fluids zum Verdrehen der zweiten Komponente (18) relativ zu der ersten Komponente (15) in entgegongesetzte Richtungen.

8. Fahranordnung nach Anspruch 7, **dadurch gekennzeichnet, dass** das druckbeaufschlagte Fluid Luft ist.

9. Fahranordnung nach einem der Ansprüche 2 bis 7, **dadurch gekennzeichnet, dass** der oder jeder Flügel (28; 29) ein Unterstützungs- oder Tragelement (30; 36) besitzt, welches an der zugeordneten ersten und/oder zweiten Komponente (15; 18) gesichert oder befestigt ist, wobei das Abstütz- oder Tragelement einen vorstehenden Dichtungs-Trag-Bereich (32; 39), eine grundsätzlich ringartige Dichtung (33; 38), die den vorspringenden Dichtungs-Trag-Bereich auf einer Dichtungs-Trag-Schulter umgibt, und eine Montageplatte (34; 40), die mit dem Dichtungs-Trag-Bereich verschraubt oder anderweitig befestigt ist zum Halten der Dichtung zwischen der Platte und der Dichtungs-Trag-Schulter, um die Dichtung (22; 28) in dichtendem Kontakt mit den umgebenden Wandungen der zugeordneten Kammer (25) zu halten, besitzt.

10. Fahranordnung nach einem der Ansprüche 1 bis 9, **dadurch gekennzeichnet, dass** eine Verriegelung, eine Rastierung oder eine Sperre (60) vorgesehen ist zur Verrastung, Verriegelung oder Sperrung der Betriebsstation (10) in der Vorwärtsfahrt-Position oder Rückwärtsfahrt-Position, wobei die Verrastung, Verriegelung oder Sperre durch den Fahrer lösbar (62) ist.

11. Fahranordnung nach einem der Ansprüche 3 bis 10, **dadurch gekennzeichnet, dass** die Verbindungen (50) für das Lenkrad, das Steuer- oder Regelpaneel und andere Funktionen und Kommunikationssysteme sich durch das Innere oder Zentrum der ersten und zweiten Komponente (15, 18) erstrecken in eine Richtung, die grundsätzlich parallel zu der Rotationsachse (X) der Betriebsstation (10) orientiert ist.

## Revendications

1. Agencement de conduite réversible pour un tracteur ou tout autre véhicule dans lequel un poste de commande de conducteur (10) comportant un siège (11), un tableau de commande (13) et un volant de direction peut être tourné entre une position de conduite en marche avant et une position de conduite en marche arrière, le poste de commande étant monté de manière à pouvoir tourner sur un plancher du véhicule par l'intermédiaire d'un actionneur rotatif commandé par pression de fluide (14) qui comporte une pale s'étendant radialement (28) qui peut être pressurisée sur un premier côté ou l'autre afin de faciliter la rotation du poste de commande entre les positions de conduite en marche avant et en marche arrière, l'agencement étant **caractérisé en ce que** des parties du poste de commande pivotent vers le haut, vers une position rétractée avant rotation à l'intérieur d'une cabine du véhicule entre la position de conduite en marche avant et en marche arrière afin de réduire le porte-à faux du poste, une unité de commande électronique (47) commande l'application d'un fluide sous pression sur la pale (28) en réponse à des signaux reçus à partir d'un premier moyen de détection (68) qui détecte si le poste est couramment dans la position de conduite en marche avant ou en marche arrière et un second moyen de détection (69) qui détecte lorsque le poste de commande a été pivoté vers le haut, vers la position rétractée.

2. Agencement selon la revendication 1, dans lequel il est prévu une vanne de commande d'écoulement de fluide (44) qui commande la pression de la pale (28) d'un premier côté ou de l'autre, l'unité de commande électronique (47) délivrant un signal vers la vanne de commande d'écoulement de fluide (44) afin de pressuriser le côté approprié de la pale (28), de manière à faciliter à la rotation du poste (10) vers l'autre position de conduite lors de la réception de signaux à partir des premier et second moyens de détection (68, 69) indiquant que le poste de commande est dans sa position rétractée.

3. Agencement selon la revendication 1 ou 2, **caractérisé en ce que** le l'actionneur tournant (14) comporte une chambre d'activation annulaire (25) formée entre un premier composant (15) ne pouvant tourner, fixé sur le plancher du véhicule et un second composant (18) sur lequel le poste de commande (10) est monté et qui peut tourner par rapport au premier composant, la pale (28) tournant avec le second composant (18) et une seconde pale (29) s'étendant radialement, étant fixée sur le premier composant (15), de telle manière que, en pressurisant la partie de la chambre annulaire (25) entre un premier côté de la pale (28) et la seconde pale (29), le second composant (18) et ainsi le poste de commande (10) peuvent être tournés dans une première direction, et que, en pressurisant la partie de la chambre annulaire entre l'autre côté de la pale (28) et la seconde pale (29), le second composant (18) et ainsi le poste de commande (10) peuvent être tournés dans l'autre direction.

4. Agencement selon la revendication 3, **caractérisé en ce que** le second composant (18) est supporté de manière à pouvoir tourner par rapport au premier composant (15) sur un palier annulaire (19) entre les composants.

5. Agencement selon la revendication 3 ou 4, **caractérisé en ce que** le premier composant (15) est de forme sensiblement annulaire et définit une chambre de section transversale en forme de U (25) les extrémités des branches de la section transversale en forme de U s'étendant vers l'axe de rotation du second composant (18), la chambre annulaire étant scellée (27) par une partie du second composant (18) qui s'étend au centre du premier composant et entoure l'axe de rotation (X) du second composant.

6. Agencement selon les revendications 4 ou 5, **caractérisé en ce que** le second composant (18) est supporté de manière à pouvoir tourner sur la face externe d'un premier côté (15b) de la chambre de section transversale en forme de U du premier composant par l'intermédiaire du palier annulaire.

7. Agencement selon la revendication 5 ou 6, **caractérisé en ce qu'**un côté inférieur (15a) de la chambre de section transversale en forme de U comporte deux orifices (42, 43) destinés à assurer l'admission en alternance de fluide sous pression de manière à faire tourner le second composant (18) par rapport au premier composant (15) dans des sens opposés.

8. Agencement selon la revendication 7, **caractérisé en ce que** le fluide sous pression est de l'air.

9. Agencement selon l'une quelconque des revendications 2 à 7, **caractérisé en ce que** la ou chaque pale (28, 29) comprend un élément support (30, 36) fixé sur le premier ou second composant (15, 18) respectif, l'élément support comportant une partie support de joint en saillie (32, 39), un joint sensiblement annulaire (33, 38) entourant la partie support de joint en saillie sur un épaulement support de joint, une plaque de montage (34, 40) vissée ou fixée d'une autre manière sur la partie support de joint afin de maintenir le joint entre la plaque et l'épaulement support de joint de manière à maintenir le joint (22, 38) en contact d'étanchéité avec les parois enveloppantes de la chambre d'actionneur associée (25).

10. Agencement selon l'une quelconque des revendications 1 à 9, comportant un verrou (60) destiné à verrouiller le poste (70) dans la position de conduite en marche ou en marche arrière, le verrou étant pouvant être libéré (62) par le conducteur.

11. Agencement selon l'une quelconque des revendications 3 à 10, **caractérisé en ce que** les raccordements (50) pour le volant de direction, le tableau de commande et d'autres fonctions et systèmes de communication s'étendent au centre des premier et second composants (15, 18) dans une direction sensiblement parallèle à l'axe de rotation (X) du poste de travail (10).
